# EUROPEAN PATENT APPLICATION

(11) **EP 4 057 112 A1**
(43) Date of publication of application: **14.09.2022**
(21) Application number: 22157688.7
(22) Date of filing: 21.02.2022
(51) Int. Cl.: G06F 3/0354, G06F 3/0362

(54) **CURSOR POSITIONING DEVICE**

(30) Priority: 12.03.2021 TW 110108876
(71) Applicant: BenQ Corporation, Taipei 114 (TW)
(72) Inventor: CHEN, Wei-Chieh, 326 Taoyuan City (TW)
(74) Representative: dompatent von Kreisler Selting Werner - Partnerschaft von Patent- und Rechtsanwälten mbB

(57) **Abstract**

A cursor positioning device includes a swing-seat which is disposed in a bottom case and has a swing-axis parallel to a bottom surface of the bottom case and a first sub-limiting member protruding away from the bottom surface. The swing-seat swings laterally relative to the swing-axis. A roller is disposed in the bottom case and has a rotating-shaft perpendicular to the swing-axis by which it is rotatably installed on the swing-seat. A fixing-cover is assembled to the bottom case with a lower surface facing the bottom surface and has a through-hole passing through the lower surface and a second sub-limiting member protruding from the lower surface. The through-hole allows a part of the roller to pass through it. The first sub-limiting member is movably assembled with the second sub-limiting member. When the roller is subjected to lateral force, a control circuit is triggered by the roller swinging laterally relative to the swing-axis.

## Description

### BACKGROUND OF THE DISCLOSURE

### Field of the Disclosure

The disclosure relates in general to an input device, and more particularly to a cursor positioning device.

### Description of the Related Art

A cursor positioning device, such as a mouse, is one of the indispensable peripheral devices of a computer. It has various basic functions such as inputting the displaying coordinates, clicking on to choose objects displayed on the screen, and scrolling displayed text or graphics up and down (front and rear) or left and right. A typical mouse design, including a roller and buttons, allows the user to control the movement of the cursor by holding the hand, to control the scrolling of the image displayed on the screen of the computer by turning the roller with the fingers, and/or to click on the objects displayed on the screen for performing functional operations by pressing the button.

Since the roller of a conventional mouse can only be rotated forward and backward, thus the text or graphics displayed on the screen of a computer can be only scrolled in a single direction (e.g., to control the vertical scroll bar of the window operation interface to move up and down), and the cursor cannot be moved in multiple directions by scrolling the roller. In order to improve the operational functionality of the mouse (for example, to meet the requirements of the reactivity and agility of game operations), new designs have been provided in which the roller is pivotally connected and accommodated in a roller seat, and the mouse base and the roller seat are connected by elastic arms or movable cantilevers, so that the roller seat can be deflected left and right on the mouse base. When the roller disposed in the roller seat is subjected to lateral force, the roller seat can be deflected correspondingly to trigger the microswitch on the mouse circuit board, thereby completing the corresponding input operation.

However, the elastic arms or movable cantilevers connecting above-mentioned roller seat and the mouse base cannot precisely control the deflection amplitude of the roller seat due to failing to restore the left and right offset displacement quickly, which may deteriorate the reliability and agility of the mouse operation, especially when the lateral force subjected by the roller seat is too large. In addition, because the lateral force subjected by the roller seat cannot be restrained, it is easy to drive the roller seat striking the microswitch inappropriately, causing to the microswitch damaged, thereby causing the circuit board to fail.

Therefore, there is a need to provide an advanced cursor positioning device to overcome the drawbacks of the prior art.

### SUMMARY OF THE DISCLOSURE

One embodiment of the present disclosure is to provide a cursor positioning device includes a control circuit, a bottom case, a swing-seat, a roller and a fixing-cover. The bottom case has a bottom surface, on which the control circuit is disposed. The swing-seat is disposed in the bottom case and has a swing-axis parallel to the bottom surface and a first-limiting member protruding on the side of the swing-seat away from the bottom surface. The swing-seat swings laterally relative to the swing-axis. The roller is disposed in the bottom case and has a rotating-shaft perpendicular to the swing-axis by which rotatably installed on the swinging-seat. The fixing-cover is assembled to the bottom case with a lower surface facing the bottom surface and has a through-hole passing through the lower surface and a second sub-limiting member protruding from the lower surface. The through-hole allows a part of the roller to pass through it. The first sub-limiting member is movably assembled with the second sub-limiting member. When the roller is subjected to lateral force, the control circuit is triggered by the roller swinging laterally relative to the swing-axis.

According to the above embodiments, a cursor positioning device is provided, wherein the cursor positioning device includes a bottom case, a control circuit disposed on a bottom surface of the bottom case, a swing seat able to swing laterally on the bottom case, a roller pivotally connected and accommodated in the swing seat and a fixing-cover assembled with bottom case. By movably assembling a first sub-limiting member protruding on the side of the swing seat away from the bottom surface with a second sub-limiting member disposed on the lower surface of the fixing-cover facing the bottom surface, the deflection amplitude of the roller that is accommodated in the swing-seat can be limited (restrained to a certain range) to prevent the roller and the swing-seat from deflecting right and left too large to restore, which deteriorates the reliability and agility of the mouse operation, and prevents the swing-seat driven by an excessive lateral force from damaging the control circuit disposed on the bottom surface of the bottom case.

### BRIEF DESCRIPTION OF THE DRAWINGS

The above and other aspects of the disclosure will become better understood with regard to the following detailed description of the preferred but non-limiting embodiment(s). The following description is made with reference to the accompanying drawings:
FIG. 1A is an exploded perspective view illustrating a cursor positioning device according to one embodiment of the present disclosure;
FIG. 1B is a perspective view of the cursor positioning device in FIG. 1A as depicted from another angle;
FIG. 1C is a top view illustrating the assembled structure of the cursor positioning device as depicted in FIG. 1A and FIG 1B;
FIG. 2A is a sectional-perspective view illustrating the assembled structure of the cursor positioning device as depicted in FIG. 1C;
FIG. 2B is a partial enlarged view of the assembled structure of the cursor positioning device as depicted in FIG. 2A; and
FIG. 3 is a partial enlarged sectional-perspective view illustrating an assembled structure of a cursor positioning device according to another embodiment of the present disclosure.

### DETAILED DESCRIPTION OF THE DISCLOSURE

The present disclosure provides a cursor positioning device to prevent the roller and the swing-seat thereof from deflecting right and left too large to restore and to prevent the swing-seat driven by an excessive lateral force from damaging the control circuit of the bottom case, so as to improve the reliability and agility of the cursor positioning device. The above and other aspects of the disclosure will become better understood by the following detailed description of the preferred but non-limiting embodiment(s). The following description is made with reference to the accompanying drawings:

Several embodiments of the present disclosure are disclosed below with reference to accompanying drawings. However, the structure and contents disclosed in the embodiments are for exemplary and explanatory purposes only, and the scope of protection of the present disclosure is not limited to the embodiments. It should be noted that the present disclosure does not illustrate all possible embodiments, and anyone skilled in the technology field of the disclosure will be able to make suitable modifications or changes based on the specification disclosed below to meet actual needs without breaching the spirit of the disclosure. The present disclosure is applicable to other implementations not disclosed in the specification.

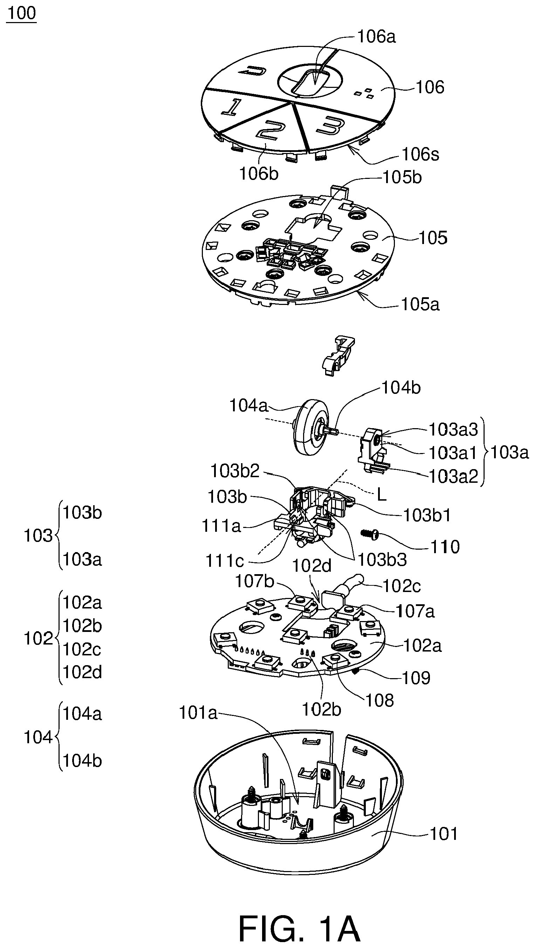

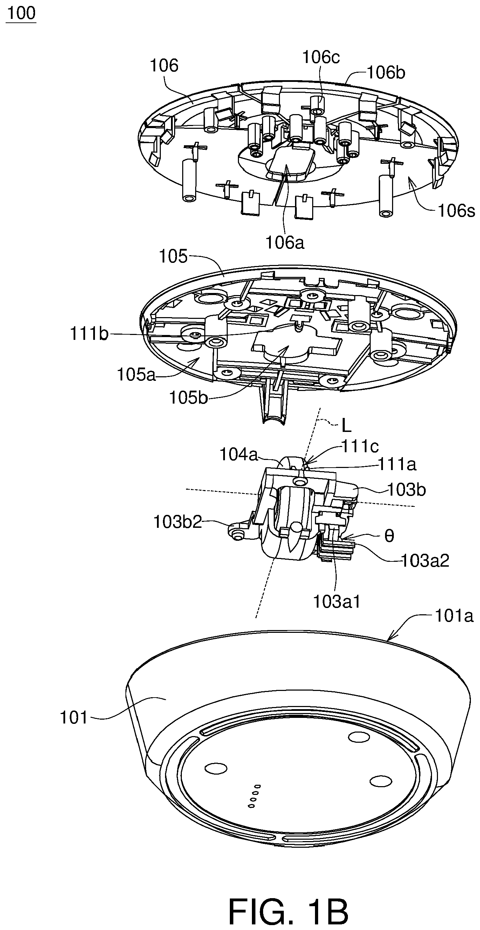

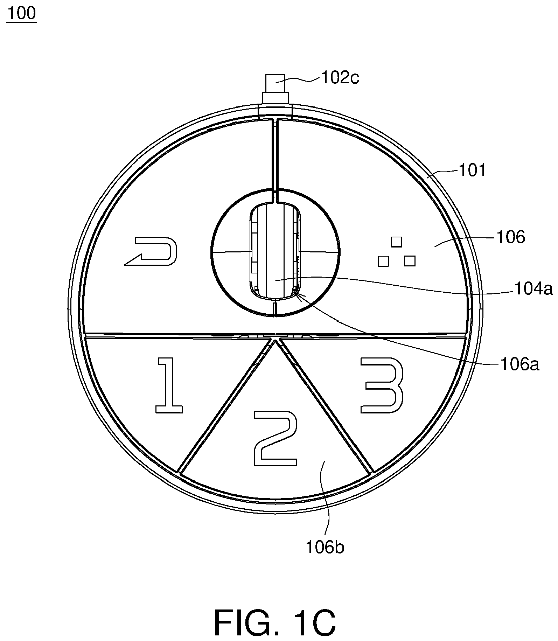

FIG. 1A is an exploded perspective view illustrating a cursor positioning device 100 according to one embodiment of the present disclosure. FIG. 1B is a perspective view of the cursor positioning device 100 in FIG. 1Aas depicted from another angle. FIG. 1C is a top view illustrating the assembled structure of the cursor positioning device 100 as depicted in FIG. 1A and FIG 1B.

In some embodiments of the present disclosure, the cursor positioning device 100 may be a mouse. However, in some other embodiments, the form and function of the cursor positioning device 100 may not be limited thereto. Any kind of built-in roller capable to rotate and deflect left and right to trigger the microswitch on a built-in circuit board to complete data input operations (such as controlling the movement of the mouse cursor, controlling the scrolling of displayed text or graphics, or controlling the computer operations (such as clicking on objects displayed on the screen for executing functions) do not depart from the spirit and scope of the present disclosure.

The cursor positioning device 100 includes: a bottom case 101, a control circuit 102, a swing-seat 103, a roller 104, a fixing-cover 105 and an upper cover 106. The bottom case 101 has a bottom surface 101a for carrying the control circuit 102, the swing-seat 103 and the roller 104. In the present embodiment, the cursor positioning device 100 may be a gaming controller. The bottom case 101 may be a base case of the gaming controller.

The control circuit 102 is placed in the bottom case 101 and fixed on the bottom surface 101a of the bottom case 101 by means of locking elements (e.g., screws)109, and includes a circuit pattern 102b, which is composed of a plurality of active elements and/or passive elements formed on a circuit substrate 102a and is electrically connected to a host (not shown) through wires 102c. In addition, the control circuit 102 further includes at least one key-switch 108, a first microswitch 107a and a second microswitch 107b configured to be in electrical contact with the circuit pattern 102b, respectively.

The swing-seat 103 is disposed in the bottom case 101, has a swing-axis L parallel to the bottom surface 101a of the bottom case 101, is laterally swingable relative to the swing-axis L on the bottom surface 101a of the bottom case 101, and extends passing through one through-hole 102d of the circuit substrate 102a.

In the present embodiment, the swing-seat 103 includes a swing-bracket 103a, which is swingably fixed on the bottom surface 101a of the bottom case 101, and a bearing-housing 103b. The swing-bracket 103a includes a bracket body 103a1, at least one bolt 103a2 and a pivotal hole 103a3. One end of the bolt 103a2 is connected to the bracket body 103a1, and the other end is movably crossed through one of a plurality of limiting holes (not shown) of the bottom case 101, so as to make the bracket body 103a1 being restrained at a fixing position on the bottom surface 101a of the bottom case 101.

In detail, the bolt 103a2 is substantially perpendicular to the swing-axis L, and forms an acute angle θ with the bracket body 103a1. The size of the limiting holes (not shown) in the bottom case 101 for accommodating the bolt 103a2 is substantially larger than the size of the bolt 103a2. When the bracket body 103a1 is erected on the bottom surface 101a of the bottom case 101, and the bolt 103a2 is inserted through one of the plurality of limiting holes (not shown), the bolts 103a2 and the bracket body 103a1 can be fulcrums of each other, thereby allowing the bracket body 103a1 to swing laterally from side to side relative to the swing-axis L, and driving the bearing-housing 103b to laterally sway along with the swing-bracket 103a.

It is worth to note that the manner of the swing-seat 103 swingably fixed to the bottom surface 101a of the bottom case 101 is not limited thereto. Any mechanism, design and arrangement that can fix the swing-seat 103 on the bottom surface 101a of the bottom case 101 and allow it to swing laterally from side to side do not depart from the spirit and scope of the present disclosure.

In addition, the swing-seat 103 further includes a first trigger arm 103b1 and a second trigger arm 103b2 extending outward from the outer edge of the bearing-housing 103b. And the first trigger arm 103b1 and the second trigger arm 103b2 correspond to a first micro switch 107a and a second microswitch 107b provided on the control circuit 102, respectively. When the roller 104 swings to the right relative to the swing-axis L, it will drive the first trigger arm 103b1 to tilt to the right and touch the first microswitch 107a, thereby triggering the control circuit 102 to output a first signal; When the roller 104 swings to the left relative to the swing-axis L, it will drive the second trigger arm 103b2 to tilt to the left and touch the second microswitch 107b, thereby triggering the control circuit 102 to output a second signal.

The roller 104 is disposed in the bottom case 101, and has a wheel body 104a and a rotating-shaft 104b. The roller 104 can be rotatably installed in the swing-seat 103 by passing the rotating-shaft 104b through the center of the wheel body 104a and perpendicular to the swing-axis L. Specifically, in the present embodiment, the bearing-housing 103b of the swing-seat 103 may be (but not limited to) a substantially semi-circular hub shell. Two slots 103b3 are recessed on opposite sides of the bearing-housing 103b for bearing and pivoting the rotating-shaft 104b of the roller 104. So that, when the rotating-shaft 104b is pivoted in these two slots 103b3 and the pivot hole 103a3, at least a part of the wheel body 104a can be rotatably accommodated in the semi-circular hub shell of the bearing-housing 103b. The part of the wheel body 104a not accommodated in the bearing-housing 103b extends upward beyond the upper edge of the semi-circular hub shell of the bearing-housing 103b.

The fixing-cover 105 is disposed in the bottom case 101, above the swing-seat 103 and assembled with the bottom case 101. In the present embodiment, the fixing-cover 105 has a lower surface 105a facing the bottom surface 101a of the bottom case 101 and a through-hole 105b passing through the lower surface 105a of the fixing-cover 105. When the fixing-cover 105 is assembled with the bottom case 101, the through-hole 105b allows the part of the wheel body 104a not accommodated in the semi-circular hub shell of the bearing-housing 103b to extend through the top surface of the fixing-cover 105. Wherein, the lateral dimension of the through-hole 105b measured along a direction parallel to the rotating-shaft 104b is substantially larger than the thickness of the wheel body 104a also measured along the direction parallel to the rotating-shaft 104b. Therefore, when the fixing-cover 105 is assembled with the bottom case 101, the wheel body 104a can be driven by a lateral force (not shown) to swing laterally under the control (restrain) of the through-hole 105b, so as to drive the bearing-housing 103b and the swing-bracket 103a swinging to the left and right.

The upper cover 106 is disposed above the fixing-cover 105 and assembled with the bottom case 101, wherein the fixing-cover 105 is disposed between a bottom surface 106s of the top cover 106 and the bottom surface 101a of the bottom case 101. The upper cover 106 also includes a through-hole 106a. Likewise, the lateral dimension of the through-hole 106a measured along a direction parallel to the rotating-shaft 104b is substantially larger than the thickness of the wheel body 104a. Therefore, when the upper cover 106 is assembled with the bottom case 101, the through-hole 106a allows the part of the wheel body 104a not accommodated in the bearing-housing 103b to extend through the top surface of the upper cover 106, so that the user can use the fingers to operate and rotate the roller 104 to control the scrolling of the text or graphics (not shown) displayed on the screen. Meanwhile, the user can push the roller 104 to sway left and right laterally to control the movement of the cursor displayed on the screen.

In addition, the upper cover 106 further includes at least one (for example, a plurality of) buttons 106b (respectively) corresponding to the key-switches 108 provided on the control circuit 102. In the present embodiment, each of the buttons 106b aligns to the corresponding key-switch 108 through a push rod 106c (as shown in FIG. 1B) protruding from the bottom surface 106s of the upper cover 106. When the user presses the buttons 106b, the push rod 106c can be pushed by the key-switches 108 corresponding to the buttons 106b, and then the control circuit 102 can be triggered to output a third signal to click or perform a function operation associating with the image (not shown) displayed on the computer screen.

In order to prevent the left and right offset displacement of the roller 104 from being too large when the roller 104 is subjected to lateral force, the first sub-limiting member 111a disposed on the bearing-housing 103b and the second sub-limiting member 111b disposed on the fixing-cover 105 can be assembled, thereby the magnitude of the left and right offset displacement of the bearing-housing 103b can be controlled within a certain range. In the present embodiment, when the fixing-cover 105 is assembled with the bottom case 101, the first sub-limiting member 111a and the second sub-limiting member 111b can be also movably assembled correspondingly. Thereby, the magnitude of the left and right offset displacement of the bearing-housing 103b can be limited within a certain range.

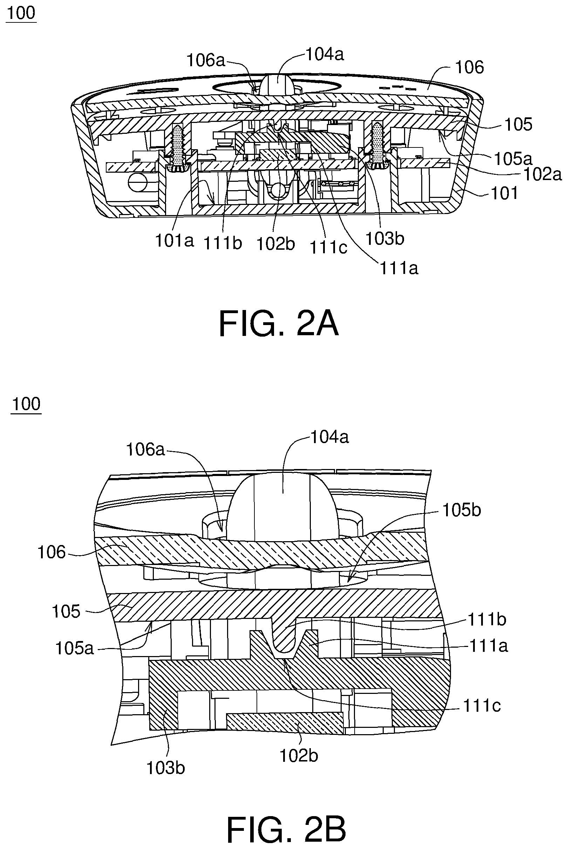

FIG. 2A is a sectional-perspective view illustrating the assembled structure of the cursor positioning device 100 as depicted in FIG. 1C. FIG. 2B is a partial enlarged view of the assembled structure of the cursor positioning device 100 as depicted in FIG. 2A. The first sub-limiting member 111a is protruded on the side of the swing-seat 103 away from the bottom surface 101a of the bottom case 101, and the second sub-limiting member 111b is protruded from the lower surface 105a of the fixing-cover 105.

In the present embodiment, the first sub-limiting member 111a includes a limiting base protruding from a side of the bearing-housing 103b away from the bottom surface 101a. The limiting base has a trumpet-shaped limiting space 111c defined by a concave portion. The second sub-limiting member 111b includes a protruding portion protruding from the lower surface 105a of the fixing-cover 105. Wherein, the first sub-limiting member 111a and the second sub-limiting member 111b are correspondingly engaged in face-toface. When the fixing-cover 105 is assembled with the bottom case 101, the protruding portion of the second sub-limiting member 111b can be accommodated in the trumpet-shaped limiting space 111c of the first sub-limiting member 111a.

Because, the size of the limiting space 111c is substantially larger than the size of the protruding portion of the second sub-limiting member 111b. Therefore, when the second sub-limiting member 111b is engaged with the first sub-limiting member 111a, the assembly of the first sub-limiting member 111a and the second sub-limiting member 111b is not tightly engaged, and there is still a certain degree of freedom. In other words, both the second sub-limiting member 111b and the first sub-limiting member 111a are movably assembled with each other. Therefore, when the wheel body 104a is forced to drive the bearing-housing 103b to swing laterally from side to side, the deflection amplitude of the wheel body 104a and the bearing-housing 103b can be limited to the range within the degrees of freedom existing between the first sub-limiting member 111a and the second sub-limiting member 111b.

In the present embodiment, the first sub-limiting member 111a and the second sub-limiting member 111b can control the deflection amplitude of the left and right swinging of the wheel body 104a and the bearing-housing 103b, which is substantially smaller than the lateral deflection amplitude of the wheel body 104a swinging in the through-hole 105b of the fixing-cover 105. By this approach, when the user exerts force to deflect the roller 104 left and right, the wheel body 104a can be prevented from being deflected too much in the left and right directions, resulting in failure to restore the roller 104 quickly and deteriorating the reliability and agility of the mouse operation. At the same time, it can also prevent the user from exerting too much force driving the first trigger arm 103b1 (or the second trigger arm 103b2 of the bearing-housing 103b) improperly to hit the first microswitch 107a (or the second microswitch 107b), causing the first microswitch 107a (or the second micro switch 107b) and the control circuit 102 damaged due to too large contact pressure.

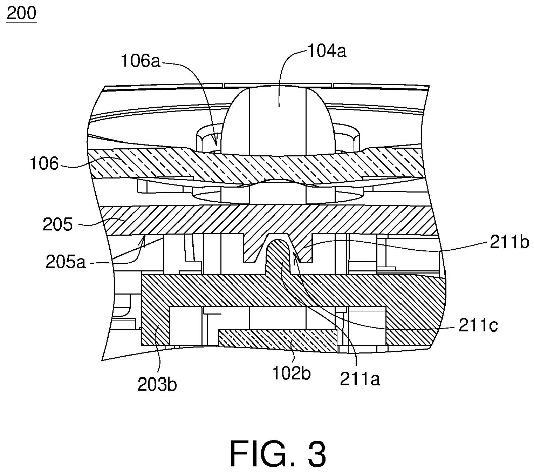

However, it should be appreciated that the configurations of the first sub-limiting member 111a and the second sub-limiting member 111b should not be limited thereto. For example, FIG. 3 is a partial enlarged sectional-perspective view illustrating an assembled structure of a cursor positioning device 200 according to another embodiment of the present disclosure. The structure of the cursor positioning device 200 shown in FIG. 3 is substantially similar to that of the cursor positioning device 100 shown in FIG. 2B, the difference therebetween is that the first sub-limiting member 211a of the cursor positioning device 200 includes a protruding portion protruding from one side of the bearing-housing 203b away from the bottom surface 101a of the bottom case 101; and the second sub-limiting member 211b includes a limiting base protruding from the lower surface 205a of the fixing-cover 205.

Wherein, the limiting base of the second sub-limiting member 211b has a limiting space 211c defined by a concave portion, and the size of the limiting space 211c is substantially larger than that of the protruding portion of the second sub-limiting member 211b. When the fixing-cover 205 is assembled with the bottom case 201, the protruding portion of the first sub-limiting member 211a can be accommodated in the limiting space 211c of the second sub-limiting member 211b.

Because there is still a certain degree of freedom between the first sub-limiting member 211a and the second sub-limiting member 211b. Therefore, the second sub-limiting member 211b can be movably assembled with the first sub-limiting member 211a. When the wheel body 204a is forced to drive the bearing-housing 203b to swing laterally from side to side, the swing amplitude of the wheel body 204a and the bearing-housing 203b can be limited within the degrees of freedom existing between the first sub-limiting member 211a and the second sub-limiting member 211b.

According to the above embodiments, a cursor positioning device is provided, wherein the cursor positioning device includes a bottom case, a control circuit disposed on a bottom surface of the bottom case, a swing seat able to swing laterally on the bottom case, a roller pivotally connected and accommodated in the swing seat and a fixing-cover assembled with bottom case. By movably assembling a first sub-limiting member protruding on the side of the swing seat away from the bottom surface with a second sub-limiting member disposed on the lower surface of the fixing-cover facing the bottom surface, the deflection amplitude of the roller that is accommodated in the swing-seat can be limited (restrained to a certain range) to prevent the roller and the swing-seat from deflecting right and left too large to restore, which deteriorates the reliability and agility of the mouse operation, and prevents the swing-seat driven by an excessive lateral force from damaging the control circuit disposed on the bottom surface of the bottom case.

While the invention has been described by way of example and in terms of the preferred embodiment (s), it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A cursor positioning device, comprising:
a bottom case, having a bottom surface;
a control circuit, disposed on the bottom surface;
a swing-seat, having a swing-axis parallel to the bottom surface and a first-limiting member protruding on a side of the swing-seat away from the bottom surface, wherein the swing-seat is disposed in the bottom case and swings laterally relative to the swing-axis;
a roller disposed in the bottom case and having a rotating-shaft perpendicular to the swing-axis by which rotatably installed on the swinging-seat; and
a fixing-cove, assembled to the bottom case with a lower surface facing the bottom surface and having a through-hole passing through the lower surface and a second sub-limiting member protruding from the lower surface;
wherein the through-hole allows a part of the roller to pass through it; the first sub-limiting member is movably assembled with the second sub-limiting member; when the roller is subjected to a lateral force, the control circuit is triggered by the roller swinging laterally relative to the swing-axis.

2. The cursor positioning device according to claim 1, wherein the first sub-limiting member comprises a limiting base protruding from the side of the swing-seat away from the bottom surface and has a limiting space; the second sub-limiting member comprises a protruding portion protruding from the lower surface and movably accommodated in the limiting space.

3. The cursor positioning device according to claim 2, wherein the limiting space is a trumpet-shaped limiting space.

4. The cursor positioning device according to claim 1, wherein the second sub-limiting member comprises a limiting base protruding from the side of the swing-seat away from the bottom surface and has a limiting space; the first sub-limiting member comprises a protruding portion protruding from the lower surface and movably accommodated in the limiting space.

5. The cursor positioning device according to claim 1, further comprising an upper cover assembled with the bottom case to make the fixing-cover disposed between the upper cover and the bottom case.

6. The cursor positioning device according to claim 5, wherein the upper cover comprises at least one buttons corresponding to a key-switch provided on the control circuit.

7. The cursor positioning device according to claim 1, wherein the swing-seat comprises:
a swing-bracket, swingably fixed on the bottom surface and having a pivotal hole; and
a bearing-housing, comprising:
a hub shell; and
two slots, recessed on opposite sides of the hub shell and parallel to the rotating-shaft for pivoting the roller.

8. The cursor positioning device according to claim 7, wherein the rotating-shaft is pivoted in these two slots and the pivot hole.

9. The cursor positioning device according to claim 7, wherein the control circuit comprises a first microswitch and a second microswitch.

10. The cursor positioning device according to claim 9, wherein the swing-seat further comprises:
a first trigger arm, extending outward from the hub shell and corresponding to the first microswitch; when the roller swings relative to the swing-axis driving the first trigger arm to tilt and touch the first microswitch, the control circuit is triggered to output a first signal; and
a second trigger arm, extending outward from the hub shell and corresponding to the second microswitch; when the roller swings relative to the swing-axis driving the second trigger arm to tilt and touch the second microswitch, the control circuit is triggered to output a second signal.
